# EUROPEAN PATENT SPECIFICATION

(11) **EP 3 323 664 B1**
(45) Date of publication and mention of the grant of the patent: **01.01.2020**
(21) Application number: 16199145.0
(22) Date of filing: 16.11.2016
(51) Int. Cl.: B60L 15/20, B60L 58/10, B60L 58/22

(54) **AN ELECTRIC VEHICLE CONTROLLER**
ELEKTROFAHRZEUGSTEUERGERÄT
ORGANE DE COMMANDE DE VÉHICULE ÉLECTRIQUE

(43) Date of publication of application: 23.05.2018
(73) Proprietor: Nio Nextev Limited, Hong Kong (HK)
(72) Inventor: LOWRIE, Jamie, London W1B 5AD (GB)
(74) Representative: Sackin, Robert

(56) References cited:
- EP-A2- 0 622 264

## Description

### TECHNICAL FIELD

The present invention relates to an electric-vehicle controller.

### BACKGROUND

Electric cars include one or more electric motors that drive the wheels of the electric car, and one or more batteries that power the electric motors. An electric vehicle battery may consist of a plurality of battery cells, connected in series for example, in order to provide a sufficiently high power to the electric motor(s). In response to input from the driver of the car, via an accelerator, a vehicle control unit (VCU) sends torque control signals to one or more motor controllers (MCs). Each motor controller is coupled to one or more of the electric motors, and in combination with the batteries, the MCs provide power to the electric motors in accordance with the torque control signals received from the VCU. The electric car also includes one or more inverters electrically connected between the batteries and electric motors to convert direct current from the batteries into alternating current for delivery to the electric motors.

It is desirable to increase the range of electric cars.

United States patent application with publication number US 2015/0291036 describes a method for controlling how far an electric vehicle can travel given the present battery state of charge. By deactivating optional electric loads such as air conditioning systems, or limiting the maximum speed of the electric vehicle, the range of the electric vehicle can be increased.

United States Patent application with publication number US 2011/0251745 describes electrically powered vehicles that include a main battery and a plurality of secondary batteries. The main battery and one of the plurality of the secondary batteries supply power to an electric motor for driving the vehicle, and the secondary battery that is used is switched based on the state of charge of the secondary batteries.

European Patent Application with publication number EP 0622264 A2 describes an electric vehicle drive system for providing effective generation of torque from start to maximum speed and to extend cruising distance. The drive system includes a low speed drive motor, a high speed drive motor and control means to adjust the share of the driving force that is to be generated by the motors.

### SUMMARY OF THE INVENTION

Embodiments of the present invention increase the range of an electric vehicle without negatively affecting the practical performance of the electric vehicle.

Where both the front and rear wheels of an electric vehicle are driven simultaneously, as in a four wheel drive car, it is often desirable to deliver more torque to the rear wheels than the front wheels, as torque delivered to the rear wheels is more effective at accelerating the vehicle to a higher speed. As a result of this, batteries that are dedicated to powering electric motors that drive the rear wheels will tend to discharge faster than batteries that are dedicated to powering electric motors that drive the front wheels.

This presents a problem, as the discharge of batteries dedicated to powering one set of wheels prior to the discharge of batteries dedicated to powering the other set of wheels limits the performance and range of the electric vehicle. The inventors have found this to be a particular problem in the context of high performance electric vehicles such as track cars. Some such cars utilize separate, replaceable, battery packs for powering the motors that drive the front and rear wheels, and because track cars need to be able to function at high performance levels at all times, it becomes necessary to stop the car to change the batteries as soon as one of battery packs discharges, even if the other battery pack has not yet discharged. This limits the range of the electric car.

The techniques described in US 2015/0291036 may be suitable for increasing the range of some road cars, but not in track cars. It is generally unacceptable to limit the performance of a track car, and track cars do not typically include optional electric loads that are typical in road cars.

The techniques described in US 2011/0251745 increase the range of electric cars by providing additional, secondary, batteries to supplement the main battery. Increasing the total available battery charge capacity is an option for increasing range, but doing so adds to the weight of the car and therefore negatively affects its performance.

Embodiments of the present invention provide an electric-vehicle controller, and method, that balance charge states of batteries in electric vehicles that include separately driven front and rear sets of wheels, in order to increase the range of the electric vehicle, without an associated reduction in driving performance.

The invention is defined in the independent claims to which reference is now directed. Preferred features are detailed in the dependent claims.

According to one aspect of the present invention, there is provided an electric-vehicle controller configured to control power provided to a front electric motor driving a front wheel of an electric vehicle and a rear electric motor driving a rear wheel of the electric vehicle. The front electric motor is powered by a first battery and the rear electric motor is powered by a second battery separate from the first battery. The electric-vehicle controller is configured to provide greater power from the first battery than from the second battery if the electric-vehicle controller determines that the charge state of the second battery is a predetermined amount lower than the charge state of the first battery and that the electric vehicle meets at least one predetermined driving characteristic, the at least one predetermined driving characteristic including that the electric vehicle is travelling in a straight line, such that the first battery charge state reduces more quickly than the second battery charge state to balance the charge states of the first battery and second battery.

An electric vehicle comprising the electric-vehicle controller is also provided.

According to another aspect of the present invention, there is provided a method of balancing the charge states of batteries in an electric vehicle. The method comprises: controlling power provided to a front electric motor driving a front wheel of an electric vehicle and a rear electric motor driving a rear wheel of the electric vehicle, the front electric motor being powered by a first battery and the rear electric motor being powered by a second battery separate from the first battery; and providing greater power from the first battery than from the second battery if it is determined that the charge state of the second battery is a predetermined amount lower than the charge state of the first battery and that the electric vehicle meets at least one predetermined driving characteristic, the at least one predetermined driving characteristic including that the electric vehicle is travelling in a straight line, such that the first battery charge state reduces more quickly than the second battery charge state to balance the charge states of the first battery and second battery.

The method may be implemented in hardware or in software in the form a computer program which when executed by one or more computers causes the one or more computers to carry out the method of balancing the charge states of batteries in an electric vehicle.

According to another aspect of the present invention, there is provided a non-transitory computer readable medium comprising instructions which when executed by one or more computers cause the one or more computers to carry out the method of balancing the charge states of batteries in an electric vehicle. It will be understood that the non-transitory computer readable medium may be a medium such as, but not limited to, a CD, a DVD, a USB storage device, flash memory, a hard disk drive, ROM or RAM.

Providing a reduced power from the battery that powers the rear motors and a greater power from the battery that powers the front motors when the charge state of the rear battery is a predetermined amount lower than the charge state of the front battery balances the charge state of the batteries so as to increase the range of the electric car. By only providing a lower power to the rear motors when predetermined driving characteristics exist, changes with the potential to affect the performance of the electric car are only made at times where there will be no impact on the practical performance of the vehicle and where no change will be apparent to the driver of the vehicle.

The at least one predetermined driving characteristic includes that the electric vehicle is travelling in a straight line. Providing a reduced power to the rear motor and an increased power to the front motor may alter the normal torque balance provided to the wheels, which may in turn affect the steering characteristics of the vehicle. By only providing a reduced current to the rear motors and a greater current to the front motors when the vehicle is travelling in a straight line, the performance of the vehicle apparent to the driver is not affected.

Determining that the electric vehicle is travelling in a straight line may be based on the position of a steering means of the electric vehicle, such as a steering wheel of a car. For example, the at least one predetermined driving characteristic may include that the position of the steering means of the electric vehicle is within a predetermined range. Additionally or alternatively, determining that the electric vehicle is travelling in a straight line may be based on the speed of the electric vehicle exceeding a predetermined minimum speed. For example, the at least one predetermined driving characteristic may include that the speed of the electric vehicle exceeds a predetermined minimum speed, such as is at least 130 km/h, at least 140 km/h or at least 150 km/h. It may be possible to infer the electric vehicle is travelling in a straight line based only on the electric vehicle exceeding a predetermined minimum speed, as the predetermined minimum speed may only be attainable when the electric vehicle is travelling in a straight line. Additionally or alternatively, determining that the vehicle is travelling in a straight line may be based on a determination that a component of the acceleration of the electric vehicle is zero or is close to zero. For example, the at least one predetermined driving characteristic may include that the acceleration of the electric vehicle is less than 1ms⁻², or less than 0.5 ms⁻², or less than 0.25ms⁻².

The at least one predetermined driving characteristic may include that the car is travelling at, or close to, a constant speed and/or that a speed of the electric vehicle exceeds a predetermined minimum speed and/or that a position of a steering means of the electric vehicle is within a predetermined range and/or that the acceleration of the electric vehicle is zero or is close to zero. For example, the at least one predetermined driving characteristic may include that the acceleration of the electric vehicle is less than 1ms⁻², or less than 0.5 ms⁻², or less than 0.25ms⁻². The rear wheels of the electric vehicle may be better at accelerating the vehicle to a higher speed, and so providing a lower power to the rear motor and a higher power to the front motor during an acceleration event could reduce the acceleration performance of the electric vehicle. Only reducing the power to the rear motors when the car is not accelerating avoids such a performance reduction.

The power provided to the rear electric motor may be approximately equal to zero. Completely shutting off power to the rear motor increases the rate at which the charge state of the first and second batteries is equalized.

The powers provided to the front electric motor and to the rear electric motor may be such as to maintain the electric vehicle at a substantially constant speed. Maintaining the vehicle at a constant speed avoids the need for the vehicle to be re-accelerated, which could further drain the battery that powers the rear motor. In this case, power to the rear motor may not completely be shut off, but reduced to a relatively low level necessary to maintain the vehicle at a constant speed given the power output of the front motor.

The charge states of the first and second batteries may comprise an amount of charge remaining on the batteries, or comprise a fraction of the charge capacity remaining on the batteries. Using a fraction of the charge capacity remaining on the batteries may be useful where the batteries have different charge capacities, as in such cases an absolute difference in charge may not accurately reflect that the battery that powers the front motor is expected to be completely discharged before the battery that powers the front motor.

The rear motor may be more powerful than the front motor. This may improve the acceleration performance of the electric car, but also increases the tendency for the battery powering the rear motor to drain faster than the battery powering the front motor. In this case, the present invention is particularly beneficial because the power provided to the powerful rear motors is reduced where possible, without negatively affecting the performance of the electric vehicle.

The first battery and the second battery may have the same charge capacity. Using batteries with the same charge capacities advantageously allows the use of identical battery packs which can be quickly and easily changed, but also increases the tendency for the battery that powers the rear motor to run out of charge before the battery that powers the front motor. In this case, the present invention is particularly beneficial because the power provided from the rear battery is reduced where possible, without negatively affecting the performance of the electric vehicle.

### BRIEF DESCRIPTION OF THE DRAWINGS

The invention will be described in more detail, by way of example, with reference to the accompanying drawings, in which:
Figure 1 is a schematic diagram illustrating a simplified plan view of an electric car embodying an aspect of the present invention;
Figure 2 is a schematic diagram illustrating a simplified plan view of an electric vehicle embodying an aspect of the present invention; and
Figure 3 is a flow diagram illustrating a method embodying an aspect of the present invention.

### DETAILED DESCRIPTION OF PREFERRED EMBODIMENTS

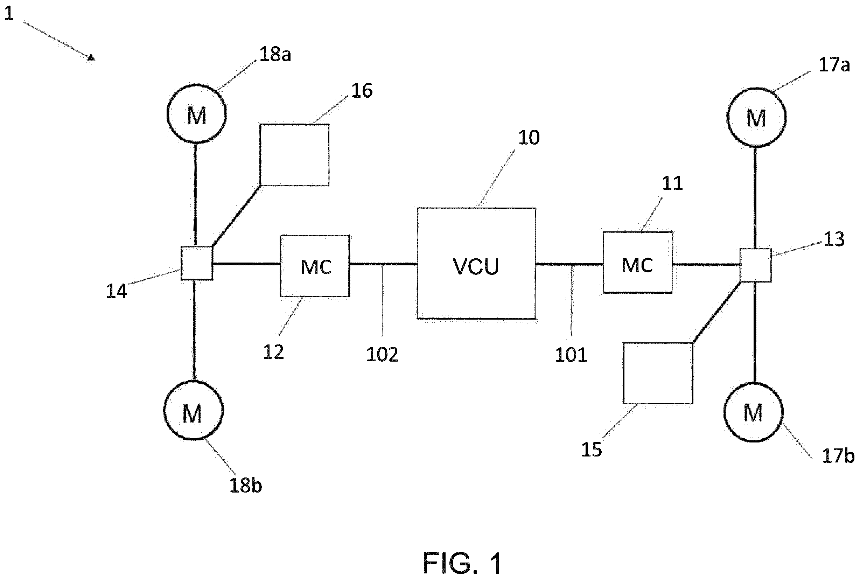

An example of an electric-vehicle controller 10 and a method 3 will now be described with reference to Figures 1 to 3.

With reference to Figure 1, an electric vehicle in the form of an electric car 1 has four wheels (not shown) and each wheel is driven by one of four electric motors 17a, 17b, 18a, 18b. The front left wheel is driven by front left motor 17a, the front right wheel is driven by front right motor 17b, the rear left wheel is driven by rear left motor 17a, and the rear right wheel is driven by rear right motor 17b. The rear motors 18a-b are more powerful than the front motors 17a-b so that the rear motors 18a-b can deliver more torque to the rear wheels than the front motors 17a-b can to the front wheels. Normally, all four wheels of the electric car are driven simultaneously, with a rear wheel drive bias to achieve the best driving characteristics, such as cornering and acceleration.

The front motors 17a, 17b receive current from the front battery 15 via front inverter 13, which delivers current in accordance with instructions received from front MC 11. Likewise, the rear motors 18a, 18b receive current from the rear battery 16 via rear inverter 14, which delivers current in accordance with instructions received from rear MC 12. The front battery 15 is dedicated to powering the front electric motors 17a-b. That is, the front battery 15 is not shared between the front motors 17a-b and the rear motors 18a-b. Likewise, the rear battery 16 is dedicated to powering the rear electric motors 18a-b. That is, the rear battery 16 is not shared between the front motors 17a-b and the rear motors 18a-b. It should be appreciated that the terms "front" battery and "rear" battery designate the respective motors that the respective batteries 15, 16 power, rather than the physical location of the batteries 15, 16 in the electric car 1.

VCU 10 is connected to the front MC 11 and to the rear MC 12 by electrical communication connections 101, 102. The VCU 10 can send control signals, including torque control signals for controlling the electric motors, to the MCs 11, 12 over the electrical communication connections 101, 102. The VCU, MCs, electrical communication connections 101, 102 and other components (not shown) may be part of a Controller Area Network (CAN bus).

The VCU 10 receives inputs, directly or indirectly, from various sensors, actuators and other controllers (not shown) and distributes control signals to the MCs 11, 12 and other components (not shown) in order to control the operation of the electric car 1. The inputs includes inputs from the driver, such as inputs from an accelerator, brake and a steering wheel or the like, controlled by the driver. Other inputs, not directly based on input from the driver, include the speed of the car and the acceleration of the car. These inputs are used to determine how much torque should be delivered to the respective wheels of the electric car, and the VCU 10 sends torque control signals to the MCs 11, 12, which in combination with the inverters, 13, 14 and the batteries 15, 16 implement the torque control signals sent by the VCU 10 by delivering appropriate amounts of current to the motors 17a-b, 18a-b.

The VCU also receives state of charge (SoC) information that describes the charge states of the front battery 15 and the rear battery 16. The SoC of the batteries 15, 16 is derived from voltage measurements.

It is often the case that the VCU 10 will instruct for more torque to be delivered to the rear wheels of the electric vehicle 1 than to the front wheels of the electric vehicle. This is because linear acceleration of the car, that is acceleration that increases the straight line speed of the car, is often best achieved by torque delivered to the rear wheels. In the electric car of Figure 1, the rear electric motors 18a-b of the electric car 1 are more powerful than the front electric motors 17a-b in order to provide for greater linear acceleration.

The greater amount of torque delivered by the rear motors 18a-b causes the rear battery 16 to discharge, or drain, more quickly than the front battery 15. In this embodiment, the front and rear batteries 15, 16 have the same charge capacity, and therefore it is ordinarily expected that the rear battery 16 will completely discharge before the front battery 15 completely discharges. In order to maintain a high level of performance, it is therefore necessary for the batteries to be replenished (by replacing the battery packs, for example) before either of the batteries 15, 16 completely discharges, as this would lead to a loss of power to one set of wheels. However, since the rear battery 16 is discharged more quickly than the front battery 15, this will mean replenishing the batteries 15, 16 even though the front battery 15 may have a significant amount of charge remaining.

In this example, the VCU 10 is configured to reduce the current provided from the rear battery 16 to the rear motors 18a-b and increase the current provided from the front battery 15 to the front motors 17a-b when the SoC of the rear battery 16 is at least a predetermined amount lower than the SoC of the front battery 15, and when the electric car 1 is travelling in a straight line above a predetermined minimum speed. This is determined based on the steering angle of the steering means of the car and the determined speed of the car.

Reducing, or even shutting off, the power to the rear motors 18a-b works to balance or equalize the SoC of the two batteries such that the charge remaining on the front battery 15 at the point at which it becomes necessary to replace the batteries because the rear battery 16 is discharged is less than it otherwise would be. This increases the range of the electric car.

Only reducing the power to the rear motors 18a-b when it is determined that the electric car 1 is travelling in a straight line above a predetermined minimum speed preserves the performance of the car. Limiting the power to the rear motors 18a-b during an acceleration event, when the speed is below the predetermined minimum speed, would reduce the torque delivered to the rear wheels, and therefore also decrease acceleration of the electric car. Limiting power to the rear motors 18a-b could also affect the car's steering which could reduce the ability of the car to corner and manoeuvre, or cause difficulties for a driver suddenly presented with a car than handles differently. However, when the electric car 1 is travelling in a straight line above a predetermined minimum speed (as a track car may be after having reached a high speed on a straight portion of the track) the power to the rear motors can be reduced without affecting the performance of the car apparent to the driver. For example, power from the rear battery 16 to the rear motors 18a-b could be shut off and the power from the front battery 15 to the front motors 17a-b increased to a level that maintains the electric car 1 at an approximately constant speed at or above the predetermined minimum speed.

While it has been described that the power provided from the rear battery 16 to the rear motors 18a-b is reduced and the power provided from the front battery 15 to the front motors 17a-b increased only when the electric car 1 is travelling in a straight line and is travelling above a predetermined minimum speed, in alternative embodiments only one of these conditions need be met. For example, it may be acceptable to limit the torque delivered to the rear wheels during a straight line acceleration event, below a predetermined minimum speed, even though this could hamper acceleration, as the drop in performance may be relatively minor. As another example, if the car is travelling at a relatively low but approximately constant speed, such as when leaving a pit-lane, a slight change to the steering of the vehicle caused by limited torque delivered to the rear wheels may be acceptable in view of the increase to the range of the electric car 1 that is provided.

While it has been described that the rear motors 18a-b are more powerful than the front motors 17a-b, this need not be the case. The rear motor may be the same power or size as the front motor. The rear battery 16 may be discharged more quickly than the front battery 15 only because the rear motors 18a-b are powered more frequently and/or more closely to their maximum power than the front motors 17a-b.

While it has been described that the front battery 15 and rear battery 16 are of the same or similar charge capacities, this need not be the case. Given that the rear motors 18a-b may be more powerful than the front motors 17a-b, the rear battery 16 may be provided with a greater charge capacity than the front battery 15, such that the expected battery life, measured in time, of the two batteries more closely matches. Where the charge capacities of the batteries 15, 16 are different, the invention may be implemented such that the predetermined amount by which the SoCs of the batteries must differ is a relative amount, rather than an absolute amount. That is, where the front and rear batteries have different charge capacities, it may be beneficial to balance the fraction of the total charge that remains on the respective batteries, rather than the absolute amount of charge that remains on the batteries. In this way, where the rear battery 16 has a greater charge capacity than the front battery 15, the rear battery 16 may be regarded as having a lower SoC than the front battery 16 even though, in absolute terms, the rear battery 16 has more charge remaining than the front battery 15.

While the electric car of Figure 1 has been described as having four wheels, four motors and two batteries, it should be appreciated that this is only an example. In another example, the invention can be applied to any electric vehicle that has at least one front wheel and at least one rear wheel, at least one front motor driving the at least one front wheel and at least one rear motor driving the at least one rear wheel, and at least one battery powering the at least one front motor and at least one different battery powering the at least one rear motor. Electric vehicles in accordance with the present invention may include further batteries that power systems of the electric vehicle other than the described front and rear electric motors, and/or the described front and rear batteries may additionally provide power to such other systems of the electric vehicle 1.

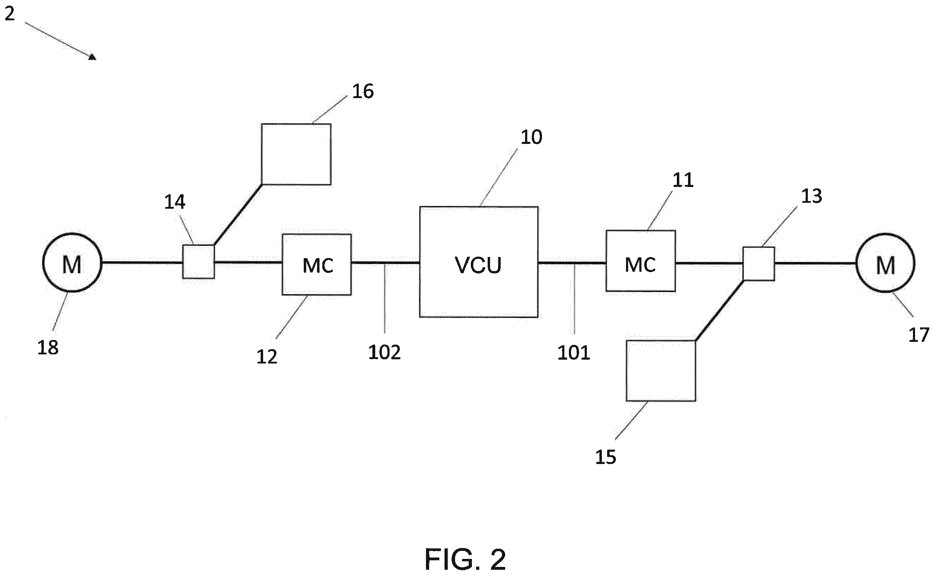

Figure 2 illustrates an electric vehicle 2 which only includes two electric motors: front motor 17 and rear motor 18.

The front motor 17 receives current from the front battery 15 via front inverter 13, which delivers current in accordance with instructions received from front MC 11. Likewise, the rear motor 18 receives current from the rear battery 16 via rear inverter 14, which delivers current in accordance with instructions received from rear MC 12.

VCU 10 is connected to the front MC 11 and to the rear MC 12 by an electrical communication connections 101, 102. The VCU 10 can send control signals, including torque control signals for controlling the electric motors, to the MCs 11, 12 over the electrical communication connections 101, 102.

The electric vehicle 2 of Figure 2 works in substantially the same way as has been described above for the electric car 1 of Figure 1. That is, the VCU 10 is configured to reduce the current provided from the rear battery 16 to the rear motor 18 and increase the current provided from the front battery 15 to the front motor 17 when the SoC of the rear battery 16 is at least a predetermined amount lower than the SoC of the front battery 15, and when the electric vehicle 2 is travelling in a straight line above a predetermined minimum speed.

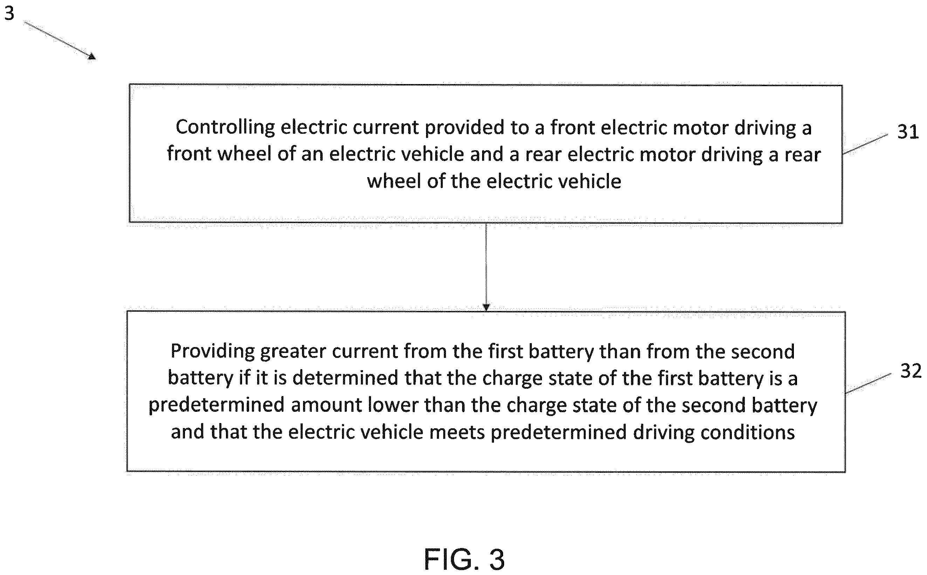

Figure 3 is a flow diagram illustrating a method 3 of balancing the charge states of batteries in an electric vehicle. The method 3 may be performed by an electric-vehicle controller, such as the VCU 10 described above with reference to Figures 1 and 2.

In step 31 of the method 3, an electric-vehicle controller controls the current provided to a front electric motor that drives a front wheel of an electric vehicle and the current provided to a rear electric motor driving a rear wheel of the electric vehicle. The front and rear batteries are separate batteries, dedicated to powering the respective front and rear motors, as described above with reference to Figure 1.

In step 32, if it is determined by the electric-vehicle controller that the charge state of the first battery is a predetermined amount lower than the charge state of the second battery and that the electric vehicle meets predetermined driving conditions, the electric-vehicle controller provides greater current from the first battery than from the second battery. This causes the charge state of the first battery to reduce more quickly than the charge state of the second battery, and therefore works to balance the charge states of the first battery and second battery.

Described above are a number of embodiments with various optional features. It should be appreciated that, with the exception of any mutually exclusive features, any combination of one or more optional features are possible. It will be appreciated that variations and modifications may be made to the described embodiment that are within the scope of the claims.

## Claims

1. An electric-vehicle controller (10) configured to control power provided to a front electric motor (17, 17a) driving a front wheel of an electric vehicle (1, 2) and a rear electric motor (18, 18a) driving a rear wheel of the electric vehicle (1, 2), the front electric motor (17, 17a) being powered by a first battery (15) and the rear electric motor (18, 18a) being powered by a second battery (16) separate from the first battery (15), the electric-vehicle controller (10) being configured to provide greater power from the first battery (15) than from the second battery (16) if the electric-vehicle controller (10) determines that the charge state of the second battery (16) is a predetermined amount lower than the charge state of the first battery (15) and that the electric vehicle (1, 2) meets at least one predetermined driving characteristic such that the first battery (15) charge state reduces more quickly than the second battery (16) charge state to balance the charge states of the first battery (15) and second battery (16),
**characterized in that** the at least one predetermined driving characteristic includes that the electric vehicle (1, 2) is travelling in a straight line.

2. An electric-vehicle controller (10) according to claim 1, wherein the electric-vehicle controller (10) is configured to determine that the electric vehicle (1, 2) is travelling in a straight line based on a position of a steering means of the electric vehicle (1, 2) and/or based on the speed of the electric vehicle (1, 2) exceeding a predetermined minimum speed.

3. An electric-vehicle controller (10) according to claim 1, wherein the electric-vehicle controller (10) is configured to determine that the electric vehicle (1, 2) is travelling in a straight line based on a determination that an acceleration of the electric vehicle (1, 2) is less than 1ms⁻², or less than 0.5 ms⁻², or less than 0.25ms⁻².

4. An electric-vehicle controller (10) according to any preceding claim, wherein the at least one predetermined driving characteristic includes any one or more of the following:
the electric vehicle (1, 2) is travelling at a constant speed;
a speed of the electric vehicle (1, 2) exceeds a predetermined minimum speed;
a position of a steering means of the electric vehicle (1, 2) is within a predetermined range; and
an acceleration of the electric vehicle (1, 2) is less than 1ms⁻², or less than 0.5 ms⁻², or less than 0.25ms⁻².

5. An electric-vehicle controller (10) according to any preceding claim, wherein the power provided to the rear electric motor (18, 18a) is zero.

6. An electric-vehicle controller (10) according to any preceding claim, wherein the powers provided to the front electric motor (17, 17a) and to the rear electric motor (18, 18a) are such as to maintain the electric vehicle (1, 2) at a constant speed.

7. An electric-vehicle controller (10) according to any preceding claim, wherein the power provided to the front (17, 17a) and rear (18, 18a) electric motors controls an amount of torque delivered by the front (17, 17a) and rear (18, 18a) electric motors to the front and rear wheel.

8. An electric-vehicle controller (10) according to any preceding claim, wherein the charge states of the first (15) and second (16) batteries comprise an amount of charge remaining in the batteries (15, 16) or a fraction of the charge capacity remaining in the batteries (15, 16).

9. An electric-vehicle controller (10) according to any preceding claim, wherein the first battery (15) and the second battery (16) have the same charge capacity.

10. An electric-vehicle controller (10) according to any preceding claim, wherein the rear motor (18, 18a) is more powerful than the front motor (17, 17a).

11. An electric-vehicle controller (10) according to any preceding claim, further configured to control power provided to a second front electric motor (17b) driving a second front wheel of the electric vehicle (1) and a second rear electric motor (18b) driving a second rear wheel of the electric vehicle (1), the second front electric motor (17b) being powered by the first battery (15) and the second rear electric motor (18b) being powered by the second battery (16), and wherein the electric-vehicle controller (10) is configured to provide greater power from the first battery (15) to both front motors (17a, 17b) than from the second battery (16) to both rear motors (18a, 18b).

12. An electric vehicle (1, 2) comprising an electric-vehicle controller (10) according to any preceding claim.

13. A method (3) of balancing the charge states of batteries (15, 16) in an electric vehicle (1, 2), the method (3) comprising:
controlling (31) power provided to a front electric motor (17, 17a) driving a front wheel of an electric vehicle (1, 2) and a rear electric motor (18, 18a) driving a rear wheel of the electric vehicle (1, 2), the front electric motor (17, 17a) being powered by a first battery (15) and the rear electric motor (18, 18a) being powered by a second battery (16) separate from the first battery (15); and
providing greater power from the first battery (15) than from the second battery (16) if it is determined that the charge state of the second battery (16) is a predetermined amount lower than the charge state of the first battery (15) and that the electric vehicle (1, 2) meets at least one predetermined driving characteristic such that the first battery (15) charge state reduces more quickly than the second battery (16) charge state to balance the charge states of the first battery (15) and second battery (16),
**characterized in that** the at least one predetermined driving characteristic includes that the electric vehicle (1, 2) is travelling in a straight line.

14. A computer program which when executed by one or more computers causes the one or more computers to carry out the method (3) of claim 13.

## Patentansprüche

1. Elektrofahrzeugsteuerung (10), die dazu ausgestaltet ist, Leistung zu steuern, die einem vorderen Elektromotor (17, 17a), der ein Vorderrad eines Elektrofahrzeugs (1, 2) antreibt, und die einem hinteren Elektromotor (18, 18a), der ein Hinterrad des Elektrofahrzeugs (1, 2) antreibt, zugeführt wird, wobei der vordere Elektromotor (17, 17a) von einer ersten Batterie (15) und der hintere Elektromotor (18, 18a) von einer zweiten Batterie (16), die von der ersten Batterie (15) getrennt ist, gespeist wird, wobei die Elektrofahrzeugsteuerung (10) dazu ausgestaltet ist, mehr Leistung aus der ersten Batterie (15) als aus der zweiten Batterie (16) bereitzustellen, wenn die Elektrofahrzeugsteuerung (10) ermittelt, dass der Ladezustand der zweiten Batterie (16) eine vorbestimmte Menge niedriger ist als der Ladezustand der ersten Batterie (15) und dass das Elektrofahrzeug (1, 2) mindestens eine vorbestimmt Fahreigenschaft aufweist, so dass der Ladezustand der ersten Batterie (15) schneller abnimmt als der Ladezustand der zweiten Batterie (16), um die Ladezustände der ersten Batterie (15) und der zweiten Batterie (16) auszugleichen,
**dadurch gekennzeichnet, dass** die mindestens eine vorbestimmte Fahreigenschaft umfasst, dass das Elektrofahrzeug (1, 2) geradeaus fährt.

2. Elektrofahrzeugsteuerung (10) nach Anspruch 1, wobei die Elektrofahrzeugsteuerung (10) dazu ausgestaltet ist, zu ermitteln, dass das Elektrofahrzeug (1, 2) geradeaus fährt, basierend auf einer Position eines Lenkmittels des Elektrofahrzeugs (1, 2) und/oder basierend auf der Geschwindigkeit des Elektrofahrzeugs (1, 2), die eine vorbestimmte Mindestgeschwindigkeit überschreitet.

3. Elektrofahrzeugsteuerung (10) nach Anspruch 1, wobei die Elektrofahrzeugsteuerung (10) derart ausgestaltet ist, zu ermitteln, dass das Elektrofahrzeug (1, 2) geradeaus fährt, basierend auf einer Bestimmung, dass eine Beschleunigung des Elektrofahrzeugs (1, 2) kleiner als 1 ms⁻² oder kleiner als 0,5 ms⁻² oder kleiner als 0,25 ms⁻² ist.

4. Elektrofahrzeugsteuerung (10) nach einem der vorhergehenden Ansprüche, wobei die mindestens eine vorbestimmte Fahreigenschaft eine oder mehrere der folgenden Eigenschaften umfasst, dass:
das Elektrofahrzeug (1, 2) mit einer konstanten Geschwindigkeit fährt;
eine Geschwindigkeit des Elektrofahrzeugs (1, 2) eine vorgegebene Minimalgeschwindigkeit überschreitet;
sich eine Position eines Lenkmittels des Elektrofahrzeugs (1, 2) innerhalb eines vorgegebenen Bereichs befindet; und
eine Beschleunigung des Elektrofahrzeugs (1, 2) kleiner als 1 ms⁻²oder kleiner als 0,5 ms⁻² oder kleiner als 0,25 ms⁻² ist.

5. Elektrofahrzeugsteuerung (10) nach einem der vorhergehenden Ansprüche, wobei die dem hinteren Elektromotor (18, 18a) zugeführte Leistung Null ist.

6. Elektrofahrzeugsteuerung (10) nach einem der vorhergehenden Ansprüche, wobei die dem vorderen Elektromotor (17, 17a) und dem hinteren Elektromotor (18, 18a) zugeführten Leistungen so bemessen sind, dass sie das Elektrofahrzeug (1, 2) auf einer konstanten Geschwindigkeit halten.

7. Elektrofahrzeugsteuerung (10) nach einem der vorhergehenden Ansprüche, wobei die an den vorderen (17, 17a) und den hinteren (18, 18a) Elektromotor abgegebene Leistung ein Drehmoment steuert, das von den vorderen (17, 17a) und hinteren (18, 18a) Elektromotoren an das Vorder- und Hinterrad abgegeben wird.

8. Elektrofahrzeugsteuerung (10) nach einem der vorhergehenden Ansprüche, wobei die Ladezustände der ersten (15) und zweiten (16) Batterien eine in den Batterien (15, 16) verbleibende Ladungsmenge oder einen Bruchteil der in den Batterien (15, 16) verbleibenden Ladekapazität umfassen.

9. Elektrofahrzeugsteuerung (10) nach einem der vorhergehenden Ansprüche, wobei die erste Batterie (15) und die zweite Batterie (16) die gleiche Ladekapazität aufweisen.

10. Elektrofahrzeugsteuerung (10) nach einem der vorhergehenden Ansprüche, wobei der hintere Motor (18, 18a) leistungsfähiger ist als der vordere Motor (17, 17a).

11. Elektrofahrzeugsteuerung (10) gemäß einem der vorhergehenden Ansprüche, die ferner dazu ausgestaltet ist, Leistung zu steuern, die einem zweiten vorderen Elektromotor (17b) bereitgestellt wird, der ein zweites Vorderrad des Elektrofahrzeugs (1) antreibt, und die einem zweiten hinteren Elektromotor (18b) bereitgestellt wird, der ein zweites Hinterrad des Elektrofahrzeugs (1) antreibt, wobei der zweite vordere Elektromotor (17b) von der ersten Batterie (15) und der zweite hintere Elektromotor (18b) von der zweiten Batterie (16) gespeist wird, und wobei die Elektrofahrzeugsteuerung (10) dazu ausgestaltet ist, den beiden vorderen Motoren (17a, 17b) von der ersten Batterie (15) mehr Leistung bereitzustellen als den beiden hinteren Motoren (18a, 18b) von der zweiten Batterie (16).

12. Elektrofahrzeug (1, 2), umfassend eine Elektrofahrzeugsteuerung (10) gemäß einem der vorhergehenden Ansprüche.

13. Verfahren (3) zum Ausgleichen der Ladezustände von Batterien (15, 16) in einem Elektrofahrzeug (1, 2), wobei das Verfahren (3) umfasst:
Steuern (31) der Leistung, die einem vorderen Elektromotor (17, 17a), der ein Vorderrad eines Elektrofahrzeugs (1, 2) antreibt, und einem hinteren Elektromotor (18, 18a), der ein Hinterrad des Elektrofahrzeugs (1, 2) antreibt, zugeführt wird, wobei der vordere Elektromotor (17, 17a) von einer ersten Batterie (15) und der hintere Elektromotor (18, 18a) von einer zweiten Batterie (16), die von der ersten Batterie (15) getrennt ist, gespeist wird; und
Bereitstellen einer größeren Leistung aus der ersten Batterie (15) als aus der zweiten Batterie (16), wenn ermittelt wird, dass der Ladezustand der zweiten Batterie (16) um eine vorbestimmte Menge niedriger ist als der Ladezustand der ersten Batterie (15) und dass das Elektrofahrzeug (1, 2) mindestens eine vorbestimmte Fahreigenschaft aufweist, so dass der Ladezustand der ersten Batterie (15) schneller abnimmt als der Ladezustand der zweiten Batterie (16), um die Ladezustände der ersten Batterie (15) und der zweiten Batterie (16) auszugleichen,
**dadurch gekennzeichnet, dass** die mindestens eine vorbestimmte Fahreigenschaft umfasst, dass das Elektrofahrzeug (1, 2) geradeaus fährt.

14. Computerprogramm, das bei Ausführung durch einen oder mehrere Computer den einen oder die mehreren Computer veranlasst, das Verfahren (3) nach Anspruch 13 auszuführen.

## Revendications

1. Organe de commande de véhicule électrique (10) configuré pour réguler la puissance fournie à un moteur électrique avant (17, 17a) entraînant une roue avant d'un véhicule électrique (1, 2) et un moteur électrique arrière (18, 18a) entraînant une roue arrière du véhicule électrique (1, 2), le moteur électrique avant (17, 17a) étant alimenté par une première batterie (15) et le moteur électrique arrière (18, 18a) étant alimenté par une deuxième batterie (16) séparée de la première batterie (15), l'organe de commande de véhicule électrique (10) étant configuré pour fournir plus de puissance de la première batterie (15) que de la deuxième batterie (16) si l'organe de commande de véhicule électrique (10) détermine que l'état de charge de la deuxième batterie (16) est d'une quantité prédéterminée plus faible que l'état de charge de la première batterie (15) et que le véhicule électrique (1, 2) répond au moins à une caractéristique de conduite prédéterminée de sorte que l'état de charge de la première batterie (15) diminue plus vite que l'état de charge de la deuxième batterie (16) afin d'équilibrer les états de charge de la première batterie (15) et de la deuxième batterie (16),
**caractérisé en ce que** la au moins une caractéristique de conduite prédéterminée comprend que le véhicule électrique (1, 2) roule dans une ligne droite.

2. Organe de commande de véhicule électrique (10) selon la revendication 1, où l'organe de commande de véhicule électrique (10) est configuré pour déterminer que le véhicule électrique (1, 2) roule dans une ligne droite sur la base d'une position d'un moyen de direction du véhicule électrique (1, 2) et/ou sur la base de la vitesse du véhicule électrique (1, 2) dépassant une vitesse minimale prédéterminée.

3. Organe de commande de véhicule électrique (10) selon la revendication 1, où l'organe de commande de véhicule électrique (10) est configuré pour déterminer que le véhicule électrique (1, 2) roule dans une ligne droite sur la base d'une détermination qu'une accélération du véhicule électrique (1, 2) est inférieure à 1 ms⁻², ou inférieure à 0, 5ms⁻², ou inférieure à 0,25 ms⁻².

4. Organe de commande de véhicule électrique (10) selon l'une quelconque des revendications précédentes, dans lequel la au moins une caractéristique de conduite prédéterminée comprend une ou plusieurs des suivantes :
le véhicule électrique (1, 2) roule à une vitesse constante ;
une vitesse du véhicule électrique (1, 2) dépasse une vitesse minimale prédéterminée ;
une position d'un moyen de direction du véhicule électrique (1, 2) est dans une plage prédéterminée ; et
une accélération du véhicule électrique (1, 2) est inférieure à 1 ms⁻², ou inférieure à 0, 5ms⁻², ou inférieure à 0,25 ms⁻².

5. Organe de commande de véhicule électrique (10) selon l'une quelconque des revendications précédentes, dans lequel la puissance fournie au moteur électrique arrière (18, 18a) est zéro.

6. Organe de commande de véhicule électrique (10) selon l'une quelconque des revendications précédentes, dans lequel les puissances fournies au moteur électrique avant (17, 17a) et au moteur électrique arrière (18, 18a) sont telles qu'elles maintiennent le véhicule électrique (1, 2) à une vitesse constante.

7. Organe de commande de véhicule électrique (10) selon l'une quelconque des revendications précédentes, dans lequel la puissance fournie aux moteurs électriques avant (17, 17a) et arrière (18, 18a) régule une quantité de couple transmis par les moteurs électriques avant (17, 17a) et arrière (18, 18a) à la roue avant et arrière.

8. Organe de commande de véhicule électrique (10) selon l'une quelconque des revendications précédentes, dans lequel les états de charge de la première (15) et de la deuxième (16) batterie comprennent une quantité de charge restante dans les batteries (15, 16) ou bien une fraction de la capacité de charge restante dans les batteries (15, 16).

9. Organe de commande de véhicule électrique (10) selon l'une quelconque des revendications précédentes, dans lequel la première batterie (15) et la deuxième batterie (16) ont la même capacité de charge.

10. Organe de commande de véhicule électrique (10) selon l'une quelconque des revendications précédentes, dans lequel le moteur arrière (18, 18a) est plus puissant que le moteur avant (17, 17a).

11. Organe de commande de véhicule électrique (10) selon l'une quelconque des revendications précédentes, configuré en outre pour réguler la puissance fournie à un deuxième moteur électrique avant (17b) entraînant une deuxième roue avant du véhicule électrique (1) et à un deuxième moteur électrique arrière (18b) entraînant une deuxième roue arrière du véhicule électrique (1), le deuxième moteur électrique avant (17b) étant alimenté par la première batterie (15) et le deuxième moteur électrique arrière (18b) étant alimenté par la deuxième batterie (16), et où l'organe de commande de véhicule électrique (10) est configuré pour fournir plus de puissance de la première batterie (15) aux deux moteurs avant (17a, 17b) que de la deuxième batterie (16) aux deux moteurs arrière (18a, 18b).

12. Véhicule électrique (1, 2) comprenant un organe de commande de véhicule électrique (10) selon l'une quelconque des revendications précédentes.

13. Procédé (3) d'équilibrage des états de charge des batteries (15, 16) dans un véhicule électrique (1, 2), le procédé (3) comprenant :
réguler (31) une puissance fournie à un moteur électrique avant (17, 17a) entraînant une roue avant d'un véhicule électrique (1, 2) et à un moteur électrique arrière (18, 18a) entraînant une roue arrière du véhicule électrique (1, 2), le moteur électrique avant (17, 17a) étant alimenté par une première batterie (15) et le moteur électrique arrière (18, 18a) étant alimenté par une deuxième batterie (16) séparée de la première batterie (15) ; et
fournir plus de puissance de la première batterie (15) que de la deuxième batterie (16) s'il est déterminé que l'état de charge de la deuxième batterie (16) est d'une quantité prédéterminée plus faible que l'état de charge de la première batterie (15) et que le véhicule électrique (1, 2) répond au moins à une caractéristique de conduite prédéterminée de sorte que l'état de charge de la première batterie (15) diminue plus vite que l'état de charge de la deuxième batterie (16) afin d'équilibrer les états de charge de la première batterie (15) et de la deuxième batterie (16),
**caractérisé en ce que** la au moins une caractéristique de conduite prédéterminée comprend que le véhicule électrique (1, 2) roule dans une ligne droite.

14. Programme informatique qui lorsque exécuté par un ou plusieurs ordinateurs fait que l'un ou les plusieurs ordinateurs mettent en œuvre le procédé (3) selon la revendication 13.
